# EUROPEAN PATENT APPLICATION

(11) **EP 2 493 194 A1**
(43) Date of publication of application: **29.08.2012**
(21) Application number: 10824383.3
(22) Date of filing: 22.10.2010
(51) Int. Cl.: H04N 7/32

(54) **VIDEO AND IMAGE ENCODING/DECODING SYSTEM BASED ON SPATIAL DOMAIN PREDICTION**

(30) Priority: 22.10.2009 CN 200910153393; 22.10.2009 CN 200910153392; 28.05.2010 CN 201010185930
(71) Applicant: Zhejiang University, Xihu District Hangzhou Zhejiang 310027 (CN)
(72) Inventor: YU, Lu, Zhejiang 310027 (CN); CHEN, Yu, Zhejiang 310027 (CN)
(86) International application number: PCT/CN2010/001661
(87) International publication number: WO 2011/047542

(57) **Abstract**

A video/image encoding/decoding system based on spatial prediction, in which at least one spatial prediciton mode is used to predict for encoding or decoding. At least one prediction mode acts on at least one pixel in the region to be encoded or decoded to generate the predictive values, using a prediction filter based on one or more reference pixels; furthermore, at least one of the spatial prediction modes has one or a combination of the following characteristics: the prediction filter which is content adaptively calculated through maximizing or minimizing the optimization objective in a specific region is used to generate the predictive values. The information of at least one spatial prediction filter of a specific spatial prediction mode is coded and written into the bit stream. The encoding/decoding system of this disclosure can better capture the dynamics of different video and image contents with improved precision of spatial prediction, and better coding performance is achieved.

## Description

### TECHNICAL FIELD

This disclosure relates to the field of multimedia communication and in particular to a video and image encoding/decoding system based on spatial prediction.

### BACKGROUND

Video and image coding is the fundamental and crucial technique which contributes to the wide application of digital video and image. In video and image coding, intra frames don't depend on the reconstructed frames, so they can be independently decoded and have the functions of random access and prevention of error transmission. But the problem is intra frames have poor compression ratio and high bit rate. In order to improve coding efficiency, the reconstructed pixels surrounding the current coded block are used for prediction to remove spatial redundancy. This spatial prediction method can be also utilized in inter frames.

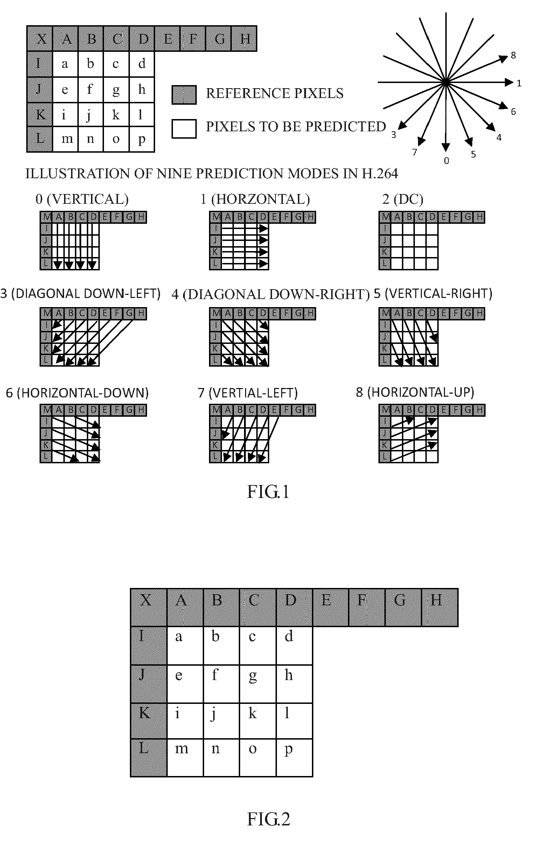

In H.264/AVC video coding standard, a method of spatial prediction is adopted to achieve better compression ratio for intra coding. H.264/AVC supports 4x4, 8x8 and 16x16 coding block for intra spatial prediction. The spatial prediction specifies a method to generate predictive pixel values for the current coded block based on the neighboring upper and left reconstructed reference pixels along a specific texture direction. Then residue with less spatial redundancy is encoded as illustrated in FIG.1.The method mentioned above achieves better coding performance comparing with the one of directly coding original pixel values.

The spatial prediction method in H.264/AVC provides a DC prediction and 8 unidirectional modes for 4x4 and 8x8 blocks, as shown in FIG.1.In nature, the method of spatial prediction in H.264/AVC applies a set of fixed and predetermined prediction filters corresponding to 9 specific prediction directions (DC mode is viewed as a special direction) to generate predictive values based on the neighboring left and upper reconstructed pixels of the current coded block. The general illustration of viewing spatial prediction modes as sets of prediction filters is described as follows: take spatial prediction modes of 4x4 block as an example. a-p denotes the pixels of current coded block, A-X denotes the neighboring left and upper reconstructed reference pixels, as shown in FIG.2.

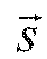 denotes a vector comprising the reconstructed reference pixel values (e.g., A to X in FIG.2 form a 1x13 vector 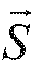 ). 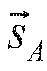 to 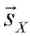 denote the reference pixels A to X respectively in the vector 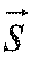 . Let 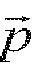 denote a vector comprising the spatial predictive pixel values of the current coded block (e.g., pixels a to p in FIG.2 form a 1x16 vector 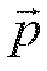 ). 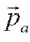 to 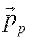 denote the predictive pixel values a to p respectively. Thus, a specific spatial prediction filter set *W^{m}* is defined for a specific prediction mode m. By multiplying the filter matrix *W^{m}* to the reference vector 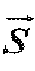 , the predictive value tor 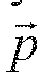 can be obtained. Here, *W^{m}* may be expressed as follows (Equation 1): ${W}^{m} = \left[\begin{matrix}{\begin{matrix}w\end{matrix}}_{a , A}^{m} & {\begin{matrix}w\end{matrix}}_{a , B}^{m} & ⋯ & {\begin{matrix}w\end{matrix}}_{a , X}^{m} \\ {\begin{matrix}w\end{matrix}}_{b , A}^{m} & & & \\ ⋮ & & ⋱ & \\ {\begin{matrix}w\end{matrix}}_{p , A}^{m} & & & {\begin{matrix}w\end{matrix}}_{p , X}^{m}\end{matrix}\right]$ The vector of predictive pixel values is obtained as follows: $\begin{matrix}\vec{\begin{matrix}p\end{matrix}} = {W}^{m} ⋅ \vec{s} & \left(2\right) \\ \left[\begin{matrix}{p}_{a} \\ {p}_{b} \\ ⋮ \\ {p}_{p}\end{matrix}\right] = \left[\begin{matrix}{\begin{matrix}w\end{matrix}}_{a , A}^{m} & {\begin{matrix}w\end{matrix}}_{a , B}^{m} & ⋯ & {\begin{matrix}w\end{matrix}}_{a , X}^{m} \\ {\begin{matrix}w\end{matrix}}_{b , A}^{m} & & & \\ ⋮ & & ⋱ & \\ {\begin{matrix}w\end{matrix}}_{p , A}^{m} & & & {\begin{matrix}w\end{matrix}}_{p , X}^{m}\end{matrix}\right] ⁢ \left[\begin{matrix}{s}_{A} \\ {s}_{B} \\ ⋮ \\ {s}_{X}\end{matrix}\right] & \left(3\right)\end{matrix}$
Each row of the matrix *W^{m}* corresponds to a linear prediction filter which is applied on the reference vector to generate a specific predictive pixel value. Thus, the whole matrix here corresponds to a filter set consisting of 16 independent filters and each independent filter corresponds to a pixel to be currently predicted in a 4x4 block.

According to the above nomenclature, take the matrix of prediction filter set for prediction mode 0 (vertical mode) of 4x4 blocks in H.264/AVC as an example, (shown in FIG.1) which can be specified as follows: $\begin{matrix}{\begin{matrix}w\end{matrix}}_{a , A}^{0} = {\begin{matrix}w\end{matrix}}_{e , A}^{0} = {\begin{matrix}w\end{matrix}}_{i , A}^{0} = {\begin{matrix}w\end{matrix}}_{m , A}^{0} = 1 ; \\ {\begin{matrix}w\end{matrix}}_{b , B}^{0} = {\begin{matrix}w\end{matrix}}_{f , B}^{0} = {\begin{matrix}w\end{matrix}}_{j , B}^{0} = {\begin{matrix}w\end{matrix}}_{n , B}^{0} = 1 ; \\ {\begin{matrix}w\end{matrix}}_{c , C}^{0} = {\begin{matrix}w\end{matrix}}_{g , C}^{0} = {\begin{matrix}w\end{matrix}}_{k , C}^{0} = {\begin{matrix}w\end{matrix}}_{o , C}^{0} = 1 ; \\ {\begin{matrix}w\end{matrix}}_{d , D}^{0} = {\begin{matrix}w\end{matrix}}_{h , D}^{0} = {\begin{matrix}w\end{matrix}}_{l , D}^{0} = {\begin{matrix}w\end{matrix}}_{p , D}^{0} = 1 ; \\ all other {w}_{i , j}^{0} = 0 ;\end{matrix}$

Here, pixels a,e,i and m are all predicted by setting them equal to reference pixel A, and pixel b,f,j,and n are predicted by setting them equal to pixel B, etc.

Other eight intra prediction modes in H.264/AVC can also be viewed as sets of extrapolation predictive filters in the same way. Note that the spatial prediction mode in H.264/AVC is a special case of spatial prediction mode. Any spatial prediction mode which generates the predictive pixel values based on one or more other original or reconstructed pixels in video/image frame can be viewed as sets of extrapolation predictive filters.

Other eight intra prediction modes in H.264/AVC can also be viewed as sets of extrapolation predictive filters in the same way. As we can see, all the filter matrices corresponding to these prediction modes are predetermined and fixed. It works well in relatively flat image region with simple texture, however, in regions which contain complex and strong high frequency components (often this is the case), such single prediction loses its accuracy, causing obvious drop in coding efficiency. Many schemes have been proposed to improving intra prediction in H.264/AVC. For example, more flexible extrapolation prediction filters (patent number: US 2008/0260031 A1) are proposed to replace unidirectional ones. But there is no proposal on adaptively generating prediction filter based on the video and image content. Considering the various and different texture and frequency features contained in different video/image frames and different video/image regions in frame, prediction filters adopting flexible mode with fixed frequency response can't capture the dynamics of image/video contents and generate accuracy spatial prediction values.

### SUMMARY

This disclosure is put forward considering the shortness of the current coding techniques. The primary aim of this disclosure is to provide a video/image encoding/decoding system with at least one spatial prediction mode for intra coding. At least one prediction mode acts on at least one pixel in the region to be encoded or decoded to generate the predictive values, using a prediction filter based on one or more reference pixels. Furthermore, at least one of the spatial prediction modes has one or a combination of the following characteristics: the prediction filter which is content adaptively calculated through maximizing or minimizing the optimization objective in a specific region is used to generate the predictive values; The information of at least one spatial prediction filter of a specific spatial prediction mode is coded and written into the bitstream.

As an optimization, adaptively calculating the spatial prediction filters specifies adaptively calculating the tap coefficients of the prediction filters.

As an optimization, the optimization objective is one of the rate-distortion cost, the sum of residual energy and the weighted sum squares of predictive residual in the spatial or frequency domain. The optimization objective is maximized or minimized by the differential on the optimization objective, when the optimization objective is the sum of residual energy or the weighted sum squares of predictive residual in the spatial or frequency domain.

As an optimization, content-based adaptively calculating the spatial prediction filters comprises the following procedures: separating the image to be encoded into at least one image sub-region, according to one classification criteria, and setting the image sub-region for each spatial prediction mode of adaptively calculated spatial prediction filter; calculating the prediction filters adaptively through maximizing or minimizing the optimization objective in a specific image region.

As an optimization, the classification criteria specify the criteria based on the texture direction of the image.

As an optimization, the specific image region specifies the region corresponding to the encoded image on the original or reconstructed image.

As an optimization, coding and writing the information to the bitstream has at least one of the following characteristics: the shape of the prediction filter corresponding region to be predicted being but not limited to the NxM rectangular, where N and M are any positive integer; the reference pixels acted on by the prediction filter being the reconstructed pixels at any positions in the current video/image; the prediction filter being linear filter or non-liner filter.

As an optimization, the prediction filter's information to be coded and to be written to the bitstream has at least one of the following characteristics: the prediction filters' information being the tap coefficients of the filter, or the matrix corresponding to the tap coefficients or the combination of the tap coefficients and the matrix corresponding to the tap coefficients; the interval of writing the information being the video/image contents with any specific length.

As an optimization, the method of coding and writing the information of at least one prediction filter used by the spatial prediction mode (modes) to the bitstream is one of the followings: predicting the prediction filters' information, coding and writing the predictive errors of the information to the bitstream; entropy coding and writing the prediction filters' information to the bitstream.

The predictive values of the prediction filters' information has one of the following characteristics: the predictive values being pre-defined; the predictive values being generated according to the reference pixels and the relationship of the positions of the pixels to predicted. The prediction filters' information is predicted and prediction errors are entropy coded and written into the bitstream.

Another aim of this disclosure is to provide a video/image decoding system with at least one spatial prediction mode for intra coding. At least one prediction mode acts on at least one pixel in the region to be decoded to generate the predictive values, using a prediction filter based on one or more reference pixels. Furthermore, at least one of the spatial prediction modes has one or a combination of the following characteristics: the prediction filter which is content adaptively calculated through maximizing or minimizing the optimization objective in a specific reconstructed image region is used to generate the predictive values; The information of at least one spatial prediction filter of a specific spatial prediction mode is extracted from the bitstream. The prediction filter reconstructed based on the extracted information from the bitstream is used to decoded the region to be decoded.

As an optimization, adaptively calculating the spatial prediction filters specifies adaptively calculating the tap coefficients of the prediction filters.

As an optimization, the optimization objective is one of the rate-distortion cost, the sum of residual energy and the weighted sum squares of predictive residual in the spatial or frequency domain. The optimization objective is maximized or minimized by the differential on the optimization objective, when the optimization objective is the sum of residual energy or the weighted sum squares of predictive residual in the spatial or frequency domain.

As an optimization, adaptively calculating the spatial prediction filters based on the decoded content comprises the following procedures: separating the image to be decoded into at least one image sub-region, according to one classification criteria, and setting the image sub-region for each spatial prediction mode of adaptively calculated spatial prediction filter; calculating the prediction filters adaptively through maximizing or minimizing the optimization objective in a specific decoded image region.

As an optimization, the classification criteria specify the criteria based on the texture direction of the image.

As an optimization, the prediction filter whose information is extracted from the bitstream has at least one of the following characteristics: the shape of the prediction filter corresponding region to be predicted being but not limited to the NxM rectangular, where N and M are any positive integer; the reference pixels acted on by the prediction filter being the reconstructed pixels at any positions in the current video/image; the prediction filter being linear filter or non-liner filter.

As an optimization, the prediction filter's information extracted from the bitstream is one of the tap coefficients of the filter, or the matrix corresponding to the tap coefficients or the combination of the tap coefficients and the matrix corresponding to the tap coefficients;

As an optimization, the method of obtaining the information of at least one prediction filter used by the spatial prediction mode (modes) from the bitstream is one of the followings: obtaining the predictive errors of the prediction filters' information from the bitstream, reconstructing the prediction filters according to the predictive errors and the prediction values of the prediction filters' information, decoding the region to be decoded using the reconstructed prediction filters; obtaining the entropy coding results of the prediction filters' information, reconstructing the prediction filters through entropy coding, decoding the region to be decoded using the reconstructed prediction filters.

As an optimization, the predictive values of the prediction filters' information has at least one of the following characteristics: the predictive values being pre-defined; the predictive values being generated according to the reference pixels and the relationship of the positions of the pixels to predicted. The entropy decoding reconstructs the predictive errors of the prediction filters' information. The prediction filter reconstructed by adding the predictive values of prediction filters' information to the predictive errors is used to decode the region to be decoded.

Another aim of the disclosure is to provide a video/image encoding system. The system writes a flag into the bitstream to indicate whether to encode a specific video/image sequence by a system described above or not.

Another aim of the disclosure is to provide a video/image decoding system. The system extracts a flag from the bitstream which indicates whether to decode a specific video/image sequence by a system described above or not.

The beneficial effect of this disclosure is following: the disclosure designs prediction filter corresponding to a specific spatial prediction mode based on the dynamic texture and frequency characteristics of video/image content to update coding system. The spatial prediction can better capture the dynamics of different video and image contents with improved precision of spatial prediction, and better coding performance is achieved.

### BRIEF DESCRIPTION OF DRAWINGS

FIG.1 shows a schematic diagram of intra prediction in H.264/AVC.

FIG.2 shows a schematic diagram of spatial prediction modes for 4x4 blocks viewed as prediction filter.

FIG.3 shows an encoding system described in the first embodiment of this disclosure.

FIG.4 shows a decoding system described in the first embodiment of this disclosure.

FIG.5 shows a procedure of adaptively generating the prediction filter described in the first embodiment of this disclosure.

FIG.6 shows the shape of the region to be predicted of a specific prediction mode in this disclosure.

FIG.7 shows the applied reconstruct reference pixels of a specific prediction mode in this disclosure.

FIG.8 shows a linear prediction filter for spatial prediction in this disclosure.

FIG.9 shows a non-linear prediction filter for spatial prediction in this disclosure.

FIG.10 shows a schematic diagram of applying sobel operation to calculate image texture direction described in the second embodiment in this disclosure.

FIG.11 shows an encoding system described in the second embodiment of this disclosure.

FIG.12 shows a decoding system described in the second embodiment of this disclosure.

FIG.13 shows a schematic diagram of encoding system adopting prediction encoding of prediction filters' information described in the second embodiment of this disclosure.

FIG.14 shows a schematic diagram of decoding system adopting prediction decoding of prediction filters' information described in the second embodiment of this disclosure.

FIG.15 shows a schematic diagram of pixels to be predicted and reference pixels corresponding to a specific spatial prediction mode.

FIG.16 shows a schematic diagram of encoding system adopting entropy encoding of prediction filters' information described in the second embodiment of this disclosure.

FIG.17 shows a schematic diagram of decoding system adopting entropy decoding of prediction filters' information described in the second embodiment of this disclosure.

FIG.18 shows a schematic diagram of property distribution of prediction filter's tap coefficients.

FIG.19 shows a schematic diagram of encoding system adopting prediction encoding and entropy encoding of prediction filters' information described in the second embodiment of this disclosure.

FIG.20 shows a schematic diagram of decoding system adopting prediction decoding and entropy decoding of prediction filters' information described in the second embodiment of this disclosure.

FIG.21 shows an encoding system described in the second embodiment of this disclosure.

FIG.22 shows a decoding system described in the second embodiment of this disclosure.

### DETAILED DESCRIPTION OF EXEMPLARY EMBODIMENT

Exemplary embodiments will now be described in detail with reference to the accompanying drawings.

### Exemplary Embodiment 1:

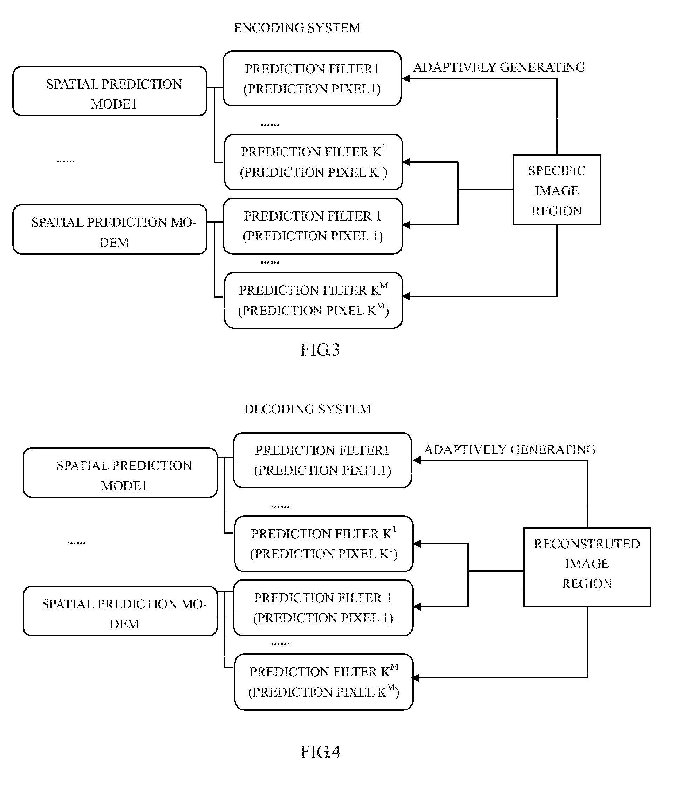

In the following description of the first exemplary embodiment,a video/image encoding system based on spatial prediction and a video/image decoding system based on spatial prediction are involved. In this exemplary embodiment as shown in FIG.3 and FIG. 4, one or more than one spatial prediciton mode is used to predict for encoding or decoding. At least one prediction mode acts on at least one pixel in the region to be encoded or decoded to generate the predictive values, using a prediction filter based on one or more than one reference pixel; The prediction filter which is content adaptively calculated through maximizing or minimizing the optimization objective in a specific region (which is only the reconstructed region at the decoder side) is used to generate the predictive values.

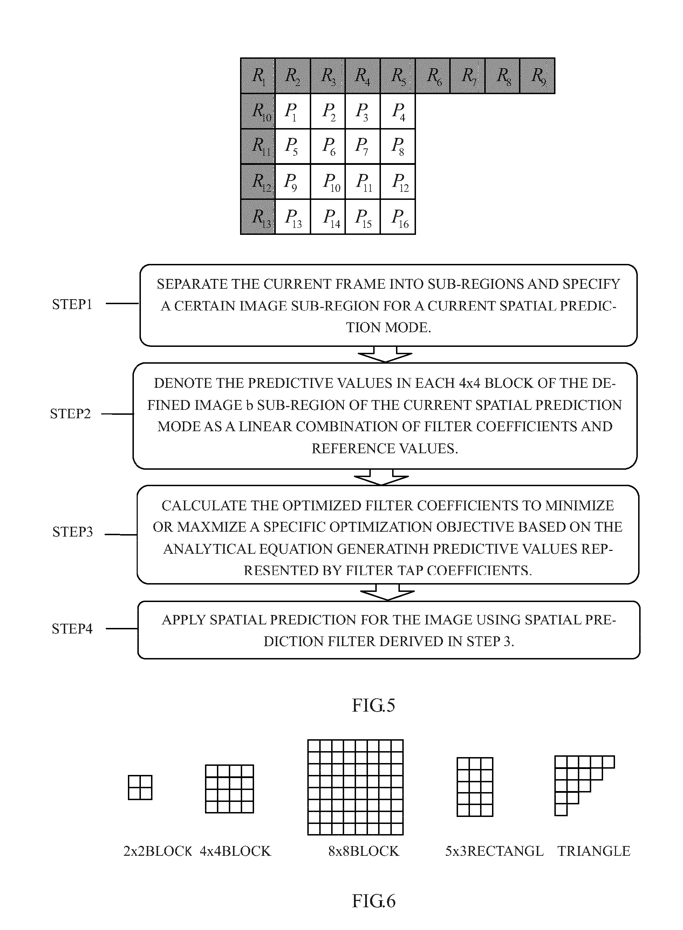

This embodiment calculates content-adaptive prediction filter which is used to generate predictive values through maximizing or minimizing the optimization objective in a specific region (which is only the reconstructed region at the decoder side). FIG.5 is a schematic diagram of this embodiment which is a detailed description of the "adaptively generating" part in FIG.3 and FIG.4.

The embodiment in FIG.5 where the region to be predicted based on the spatial prediction mode is 4x4 block and a linear filter acts on total 13 upper and left reconstructed reference pixels to generate prediction is taken as an example which shows a method of generating predictive pixel values through optimized content adaptive prediction filter. In the technical field, spatial prediction modes are viewed as linear prediction filters, in nature, this embodiment shows a way to generate optimized prediction filter matrix *W^{m}.*FIG.5 gives a 4-step algorithm.

In step1, the current frame is separated into several sub-regions and a certain image sub-region is specified for a current spatial prediction mode. The current spatial prediction mode calculates an optimized prediction filter based on the content characteristics in the defined image sub-region. Note that there is no limitation on the connectivity of the sub-region.

In step2, the predictive values in each 4x4 block of the defined image sub-region of the current spatial prediction modes are denoted as a linear combination of tap filter coefficients and reference values. The following symbols are defined:

*K* : number of 4x4 blocks in a specific image sub-region

*T^{k}*(*i*):the *i^{th}* original pixel value in the *k^{th}* 4 x 4 block to be predicted *i*=1,2,...,16

*R^{k}*(*j*):the *j^{th}* reference pixel value in the *k^{th}* 4 x 4 block, *j*=1,2,...,13

*C*(*i,j*):the filter coefficient acting on the *j^{th}* reference pixel value to generate the *i^{th}* predictive pixel value

*P^{k}(i):* the predictive value of t*he i^{th}* pixel in the *k^{th}* 4 x 4 block(output of the prediction filter)

Thus, the predictive pixel values in the *k^{th}* 4 x 4 block are denoted by a combination of filter coefficients and reference values as follows: ${P}^{k} \left(i\right) = {\sum }_{j = 1}^{13} {R}^{k} \left(j\right) \times C \left(i, j\right) , i = 1 , 2 , … , 16 ; k = 1 , 2 , … K$

In step3, the optimized filter coefficients are calculated to minimize or maximize a specific optimization objective based on the analytical equation 5 derived in step 2.The optimization objective includes but not limited to rate-distortion cost, the sum of residual energy and the weighted sum squares of predictive residual in the spatial or frequency domain. The optimization objective can be changed with different video/ image frames (time changeable) or with different regions in a frame (spatial changeable) in order to continuously generate adaptive and optimized spatial prediction method.

For instance, taking the sum of residual energy as the optimization objective, an embodiment of generating optimized prediction filter through minimizing the selected optimization objective is illustrated.

Based on the above definition and the predictive values of the 4x4 blocks in a defined image sub-region of the current spatial prediction mode as defined in analytical equation 5, the sum of residual energy of these 4 x 4 blocks in the image sub-region to be predicted is denoted as follows: $\begin{matrix}Energy = {\sum }_{k = 1}^{K} \left\{{\sum }_{i = 1}^{16}{\left[{T}^{k}\left(i\right)-{P}^{k}\left(i\right)\right]}^{2}\right\} \\ = {\sum }_{k = 1}^{K} \left\{{\sum }_{i = 1}^{16}{\left[{T}^{k}\left(i\right)-{\sum }_{j = 1}^{13}{R}^{k}\left(j\right)\times C\left(i, j\right)\right]}^{2}\right\}\end{matrix}$

As shown in equation 6, the sum of residual energy is a quadratic expression of C(i,j). Thus, to minimize the sum of residual energy and improve prediction accuracy, a set of equations is set up by computing the partial derivation of the sum of residual energy with respective to each prediction filter coefficient C(I,J)(I=1,2,...,16;J=1,2,...,13)as follows: $\begin{matrix}\frac{dSSD}{dC \left(I, J\right)} = 0 ⇒ \\ {\sum }_{k = 1}^{K} \left\{{\sum }_{i = 1}^{16}2\times \left[{T}^{k}\left(i\right)-{\sum }_{j = 1}^{13}{R}^{k}\left(j\right)\times C\left(i, j\right)\right]\times \left[-C\left(I, J\right)\right]\right\} = 0 \\ {\sum }_{k = 1}^{K} {\sum }_{i = 1}^{16} {\sum }_{j = 1}^{13} {R}^{k} \left(j\right) \times C \left(i, j\right) \times C \left(I, J\right) = {\sum }_{k = 1}^{K} {\sum }_{i = 1}^{16} {T}^{k} \left(i\right) \times C \left(I, J\right) = 0 \\ I = 1 , 2 … 16 , J = 1 , 2 … 13\end{matrix}$

Equation 7 is a linear system of 208(16x13) equations with 208 variables C(I,J).By solving the linear system of equations, optimized spatial prediction filter set is derived to minimize the sum of residual energy defined in a specific image region resulted from applying a specific prediction mode.

Note that the optimization objective and the method of deriving filter coefficients above is just an implementation. Other optimization objectives and methods of deriving filter coefficients can be applied in other implementations. Rate-distortion cost and weighted sum squares of predictive residual in the spatial or frequency domain can be also chosen as an alternative optimization objective. Take the weighted sum square residual as the selected optimization criterion and follow the above definition and define:
*α*(*i*) : the weighted value of the *i^{th} pixel* in each 4x4 residual block

The weighted sum square of predictive residual resulted in applying a certain prediction mode in a specific 4x4 sub-region based on analytical equation 5 is defined in equation 8: $\begin{matrix}Sum & = {\sum }_{k = 1}^{K} \left\{{\sum }_{i = 1}^{16}α\left(i\right)\times {\left[{T}^{k}\left(i\right)-{P}^{k}\left(i\right)\right]}^{2}\right\} \\ & = {\sum }_{k = 1}^{K} \left\{{\sum }_{i = 1}^{16}α\left(i\right)\times {\left[{T}^{k}\left(i\right)-{\sum }_{j = 1}^{13}{R}^{k}\left(j\right)\times C\left(i, j\right)\right]}^{2}\right\}\end{matrix}$

The sum in equation 8 is a quadratic expression of coefficients C *(I*, *J)* which corresponds to a specific reference pixel. Thus, to minimize the weighted sum square of predictive residual, a set of equations is set up by computing the partial derivative of sum with respective to each prediction filter coefficient *C(I,J).* By solving the set of equations, optimized spatial prediction filter is derived by the criterion of minimizing the weighted sum square of predictive residual.

In step 4, the predictive pixel values are generated by the spatial prediction filter derived in step 3. The predictive pixel value is a combination of filter coefficients *C(I,J)* and reference pixel values shown in analytical equation 5. Although the filter coefficients is content adaptively derived in a specific image region, in reality encoding or decoding process, the prediction mode can be applied to a larger region considering the similar texture or frequency characteristics existing in other image regions.

Note that diagram 5 is just one of the implementations of the embodiment. The embodiment proposed has no limitation on the size and shape of the current coding region, the position and number of the reference pixels, the method of generating predictive values, and the property and form of the prediction filter. However, the theory and method of generating content adaptive spatial prediction filter shown in diagram 5 can be applied to spatial prediction modes of various forms. A following detailed illustration comprising 3 aspects is given.

Firstly, the first embodiment has no limitation on the size and shape of the current coding region. It can be a coding block utilized in H.264/AVC, that is, 4x4, 8x8, 16x16 blocks. Other shapes such as NxM rectangular (N and M is any positive integer), and triangle shown in FIG.6 are also permitted.

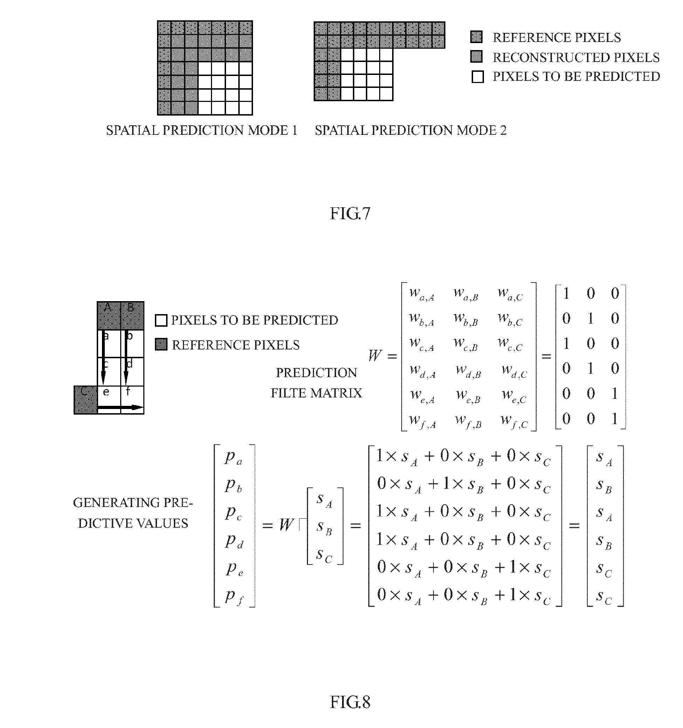

Secondly, the reference pixels acted on by the prediction filter can be the reconstructed pixels at any positions in the current video/image. The reference pixels include but not limited to the neighboring pixels of the current coding region. The two spatial prediction modes as shown in FIG.7 utilize upper 3 rows and left 3 columns(in the left picture) and upper 2 rows and left 2 columns(in the right picture) reconstructed pixels of the current coding region as reference pixels, respectively.

Thirdly, the spatial prediction filter adopted in a specific prediction mode has no limitation on its linearity. FIG.8 is an implementation utilizing a linear filter to generate predictive values in the region to be coded. The spatial prediction mode in FIG.8 can be denoted by a matrix *W*. The specific prediction mode applies intra spatial prediction in a 3x2(a-f) block utilizing 3 reconstructed pixels (A, B, C) as reference pixels. This prediction mode is effective when the dominating texture direction of the top and bottom region is vertical and horizontal respectively. Other linear filters of various forms are permitted in other implementations of spatial prediction modes.

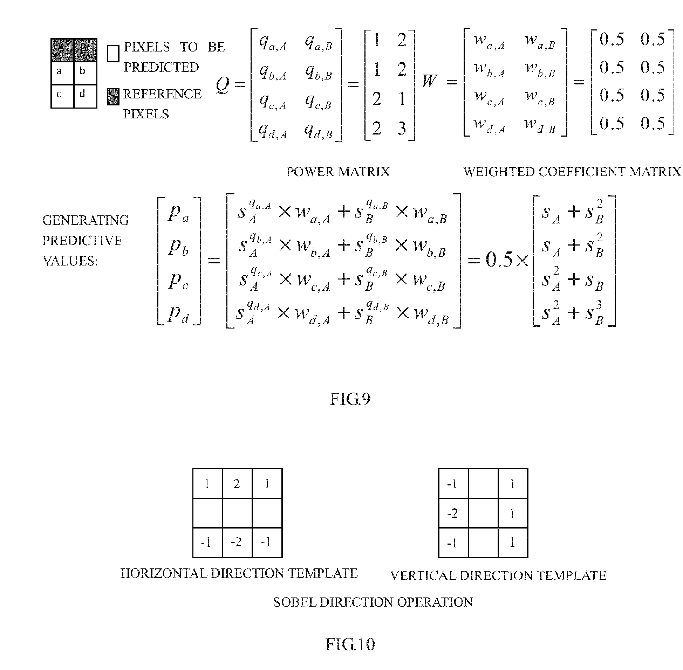

FIG.9 is an example of an implementation utilizing a nonlinear filter. The specific prediction mode applies intra spatial prediction in a 2x2 block utilizing 2 reconstructed pixels (A, B).Matrix Q denotes the power of reference pixels and matrix W denote the weight value of powered reference pixels on the pixels in the region to be predicted. Other nonlinear filters of various forms are permitted in other implementations of spatial prediction modes.

Each prediction mode designs its own prediction filter following the scheme shown in diagram 5.In step 1, the current coded frame is classified into M (M is the number of prediction modes) groups by certain criterion. Each prediction mode m is assigned with one block group. The classification criterions include but not limited to criterions based on texture direction or based on spatial prediction coding method utilized in current coding technique. In the following, two implementations illuminating the methods of image classification are given.

When more than one spatial prediction mode is applied, each mode calculates adaptive prediction filter following the procedure shown in Fig.5. In step 1, the image sub-region is set for each spatial prediction mode according to one classification criterion. The classification criterion includes but not limited to criterion based on texture direction and criterion based on current prediction coding. The following are two implementations illustrating the method of setting image sub-regions for each spatial prediction mode based on different classification criteria.

Assume three spatial prediction modes adopt the above method of adaptively calculating the prediction filter for 4x4 blocks to be predicted. As one classification implementation, intra prediction coding technique in H.264 is applied to classify the image region to three categories (three sub-regions). Each 4x4 block of the image region is tried to be coded using 3 prediction modes in H.264 which are horizontal prediction mode, vertical prediction mode and DC prediction mode and is put into a specific sub-region if the corresponding prediction mode results in the minimize rate distortion cost. As another classification implementation, the image region is classified according to the texture direction. The texture direction of each 4x4 block is determined through sobel direction operation and is put into a specific category (sub-region). To be specific, sobel operation templates of horizontal and vertical directions are applied to each 4x4 block to calculate horizontal and vertical texture strength respectively with a threshold which is set to determine texture direction of each 4x4 block as shown in FIG.10. When horizontal texture strength is greater than the vertical one, and both of them are larger than the threshold, the texture direction of the block is horizontal; when vertical texture strength is greater than the horizontal one, and both of them are greater than the threshold, the texture direction of the block is vertical; otherwise, the block has no direction. The threshold value is set according to application requirement.

The image region classification is completed according to the classification criterion based on texture direction determination. The image sub-region is set for each spatial prediction mode which adaptively calculates prediction filter for better prediction of corresponding image sub-region based on the texture and frequency characteristics of the specific image sub-region.

As an important characteristic of this embodiment, the encoder system can adaptively generate the spatial prediction filter based on the texture and frequency characteristics of original video contents and can also adaptively generate the spatial prediction filter based on the texture and frequency characteristics of the reconstructed image region corresponding to the region to be predicted(since the original video contents is not available in the decoder side, the decoder can only utilize the information of reconstructed image). To be specific, when the texture and frequency characteristics of original image region to be predicted are applied, the region to be predicted mentioned above is original image region. The encoder applies this embodiment according to the detailed description mentioned above and generates spatial prediction filter to adapt to the characteristics of the original image to be predicted. The coding results of prediction filters' information are written and transmitted to the decoder to realize the encoding and decoding system correctly encode and decode the video images since the decoder system can't apply this embodiment because of the unavailable original image to be predicted. When the texture and frequency characteristics of reconstruct image region to be predicted are applied, the region to be predicted mentioned above is reconstruct image region. The encoder and decoder systems respectively apply this embodiment to adaptively generate spatial prediction filter based on the texture and frequency characteristics of reconstruct image region since the reconstruct image region to be predicted is available in both encoder and decoder system. The encoder and decoder systems can synchronously update and adjust the spatial prediction modes to realize correctly coding video images with the overhead of transmitting prediction filters' information avoided if the encoder and decoder systems applying this embodiment in the same way is guaranteed.

### Exemplary Embodiment 2:

In the following description of the second exemplary embodiments,a video/ image encoding system based on spatial prediction and a video/image decoding system based on spatial prediction are invloved.

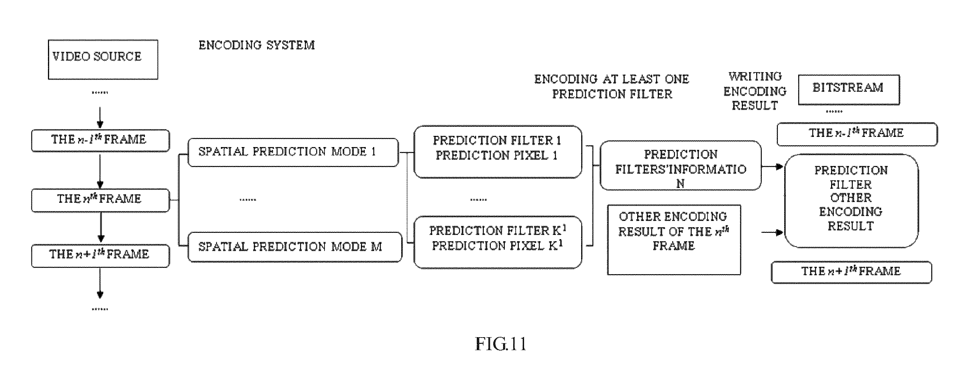

In this exemplary embodiment as shown in FIG 11, the encoder system uses M(M>=1) spatial prediction modes for the coding of the current coded frame(the *n^{th}* frame).At least one prediction mode(mode 1 in FIG.11 as an example) acts on at least one pixel in the region to be encoded or decoded to generate the predictive values, using a prediction filter(K¹ is the number of pixels adopting spatial prediction mode 1 to generate predictive values).The information of at least one prediction filter used by at least one spatial prediction mode is coded and written to the bitstream.

Correspondly, the decoder updates the spatial prediction mode by obtaining the information of at least one predition filter used by at least one spatial prediction mode from the current frame(the *n^{th}* frame)'s bitstream and decodes the bitstream using the updated prediction filter corresponding to the encoder system. This embodiment allows writing different spatial prediction filters' information for different video/image content to the bitstream to make applying different spatial prediction methods to different video/image content possible. Comparing with the predetermined and fixed prediction filter for each spatial prediction mode in the current coding technique, this embodiment can better capture the texture and frequency characteristics of image content and provide superior prediction accuracy.

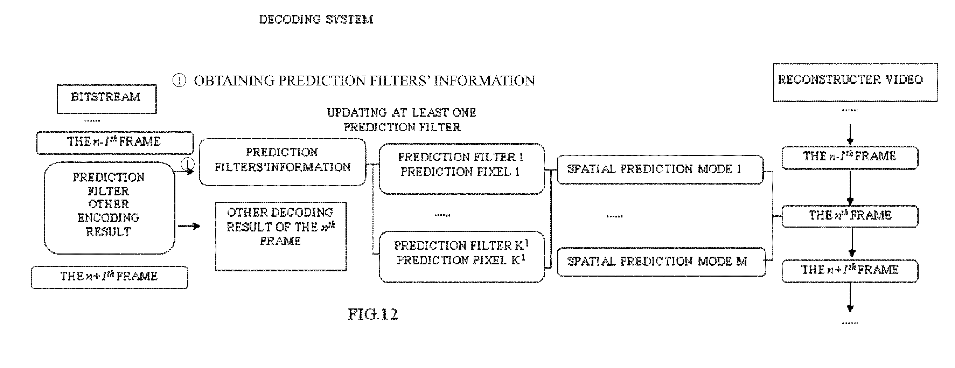

Note that the interval of updating prediction filter by writing or obtaining prediction filter's information to or from the bitstream is not limited to a frame. Using frame as an interval in FIG.11 and FIG.12 is just an implementation.In other implementation, the interval can be the video/image contents with any specific length, such as a sequence, a group of pictures, a slice, one or more macroblocks and so on.

In this embodiment, the region to be predicted of each spatial prediction mode adopted by encoder and decoder system can be any shape, such as 4x 4 block,8 x 8 block, 16x16 block used in H.264/AVC, Nx M rectangular(N and M are any positive integer), triangle and so on, as shown in FIG.6. Considering the region shape with similar texture varies in different images, the flexible classification of regions to be predicted makes better adjusting the spatial prediction method based on the image characteristics resulting in maximized advantages of this disclosure.

In this embodiment, the reference pixels of each prediction mode adopted by encoder and decoder system can be the reconstructed pixels at any positions in the current video/image. The reference pixels include but not limited to neighboring pixels of the current coding region. As an implementation, the two spatial prediction modes as shown in FIG.7 utilize upper 3 rows and left 3 columns(in the left picture) and upper 2 rows and left 2 columns(in the right picture) reconstructed pixels of the current coding region as reference pixels, respectively. In other implementations, reference pixels can be the reconstructed pixels at any positions in the current video/image.

In this embodiment,the prediction filters for spatial prediction modes can be linear or nonlinear. This feature has been illuminated in detail with accompanying drawings FIG.8 and FIG.9.

In the embodiment, the encoding and decoding system flexibly updates and adjusts a linear or non-linear prediction filter for each spatial prediction mode based on the texture and frequency characteristics of image contents to generate accuracy spatial prediction values in complex and varied circumstance and improves coding efficiency. In order to realize the real-time updating of prediction filter, the prediction filters' information is written into the bitstream in the encoder system and obtained from the bitstream in the decoder system,as shown in FIG.11 and FIG.12. As an implementation, the filter's tap coefficients(filter matrix *W*) are coded and written into the bitstream in the encoder system and obtained in the decoder system.The power matrix(matrix *Q* in FIG.9) is writen into the bitstream in the encoder system and obtained from the decoder system if a non-linear filter is applied. Take the linear filter as an example, a encoding/decoding procedure is described as following: setting the dynamic range of filter's tap coefficients[min,max]; determining bit numbers N denoting each filter's tap coefficient. Then the enoder quantizes each filter's tap coefficient *C* to be transimitted according to equation 9, converting the coefficient to an N bits fixed-point number within the range [0,2*^{N}-*1] .The N bits in the 2 binary system representing the filter's tap coefficient is coded and trasmitted. $\begin{matrix}span = max - min ; \\ F = floor ⁢ \left({2}^{N}\times {/ \left(c-min\right)}_{span}+0.5\right) ;\end{matrix}$
where floor(x) means rounding the elements of X to the nearest integers less than or equal to X.

Corresponding, the decoder reconstruts each filter's tap coefficients according to the equation 10 by obtaining the N bits fixed-pint number F representing each filter's tap coefficient. $\begin{matrix}span = max - min ; \\ C = min + \left(F\times span\right) / {2}^{N} ;\end{matrix}$

For example, the dynamic range of filter's tap coefficients is [0,1] and 8 bits fixed-point number is used to represent each filter coefficient. In the encoder system, coefficient *C*=0.25 is fixed to a fixed-point number F=floor(256x 0.25/1+0.5)=64,the 8 bits in the 2 binary system 01000000 are writen into the bitstream; The decoder generats F=64 by obtaining 01000000 in the bitstream and reconstructs the filter's tap coefficient *C*=0+(64x 1)/256=0.25.The fixation of the filter's tap coefficients in encoding system, the method of reconstructing filter's tap coefficients, the dynamic range of filter's tap coefficients, the bit numbers used to represent the filter coefficients can vary in different implementations according to the application requirments. For example, the spatial predictive values can be generated by directly applying fix numbers,thus avoiding the process of reconstructing the coefficients in float notation, the dynamic range can be set to[-1,1] and 12 bits can be used to represent the filter's tap coefficients.

The implementation mentioned above relates to a method of coding and transimitting the prediction filter's information through fixing the filter coefficients and writing fixed coefficients into the bitstream. In other implentation, other methods of coding and transmitting the prediction filter's information in the encoding system and obtaining the prediction filter's information in the decoder side can be applied. For the sake of convience, in the following illumination of the second embodiment, the implentamention described above is taken as an example when relating to the actions on the prediction filter's information in the encoder/decoder side.

In the second embodiment, when encoding and decoding the prediction filter's information corresponding to spatial prediction modes, the encoding system can encode the prediction filters' information of one or more spatial prediction modes in one time; when encoding a spatial prediction mode, filters applied in one or more image regions to be predicted are encoded in one time. Corresponding, the decoder decodes the prediction filters' information according to the encoding results. Prediction filters' information of one or more spatial prediction modes is decoded in one time according to the encoding results. When a spatial prediction mode is decoded, prediction filters' information of one or more region is decoded in one time. The storage structure of prediction filters' information represented by syntax is shown in Table 1.

In Table.1, MODE_NUM denotes the total number of spatial prediction modes:

POS_NUM[*m*] denotes the number of pixels(the number of filters) in the region to be predicted of the *m^{th}* spatial prediction mode(*m*=0,1,...,MODE_NUM-1);

COEFF_NUM[*m*][*pos*]denotes the number of the filter's tap coefficients utilized for the *pos^{th}* pixel in the region to be predicted adopting m^{th} spatial prediction mode;

code_filter_flag[] equals 1 means the information of at least one spatial predicton filter needs to be encoded and decoded of the current spatial prediction mode;

code_filter_flag[] equals 0 means no information of the filters needs to be encoded or decoded of the current spatial prediction mode;

code_pos_flag[][] equals 1 means the corresponding filter acts on the pixel adopting the current spatial prediction mode in the current region to be predicted needs the coded/decoded filter information;

code_pos_flag[][] equals 0 means the corresponding filter acts on the pixel adopting the current spatial prediction mode in the current region to be predicted doesn't need any coded/decoded filter information;

coeff_N_bit_fix ed_value[][][] denotes the each corresponding filter's tap coefficients acting on the pixels in the current region to be predicted adopting the current spatial prediction mode.

**Table 1:**

| frame header( ) | | | | | | C | Descriptor |
|---|---|---|---|---|---|---|---|
| { | | | | | | | |
| | ... | | | | | | |
| | for (m=0;m<MODE_NUM;m++) { | | | | | | |
| | | **code_filter_flag[m]** | | | | | u(1) |
| | | if (code_filter_flag[m]==1) | | | | | |
| | | | for (pos=0; pos<POS_NUM[m];pos++) { | | | | |
| | | | | **code pos_flag[m][pos]** | | | u(1) |
| | | | | if (code filter flag[m][pos]) { | | | |
| | | | | for (coeff_n=0; coeff_n<COEFF_NUM[m][pos];coeff_n++) | | | |
| | | | | | **coeff_N_bit_fi×ed_value[m][pos][coeff_n]** | | u(N) |
| | | | | } | | | |
| | | | } | | | | |
| | | | } | | | | |
| | | | ... | | | | |
| } | | | | | | | |

Besides,u(n) denotes n being a fixed-point number in 2 binary system.

From the Table 1, the second embodiment controls the number of spatial prediction modes to be encoded/decoded and the number of filters applied in a spatial prediction mode to be encoded/decoded in a flexible way.

This embodiment not only flexibly controls the range of the coded prediction filters when encoding/decoding the prediction filters' information but also flexibly controls the interval of encoding/decoding prediction filters' information which can be the video/image contents with any specific length,not limiting to a frame interval shown in Table 1. The interval of encoding/decoding prediction filters' information can be a sequence,a group of pictures, a slice, one or several macro-blocks and so on.

For example, the syntax contents of coding results are put to the head of sequence(sequence_header( )) or the head of slice(slice_header( )) when the interval of encoding/decoding prediction filters' information is a sequence or a slice.Table 2 is an implementation when the interval of encoding/decoding prediction filters' information is one or a several macro-blocks.

In Table 2, code_filters equals 1 means the prediction filters' information needs to be encoded/decoded in the encoding and decoding system and the following syntax elements' meanings are the same with those in Table 1.

code_filters equals 0 means the current macro-block doesn't need to encode the prediction filters' information in the encoding system.

Through the implementation in Table 2, one or several macro-blocks updates the information of prediction filter by setting a flag in the head of each macro-block indicating the updation information.

**Table 2:**

| macroblock header( ) | | | | | | C | Descriptor |
|---|---|---|---|---|---|---|---|
| { | | | | | | | |
| | ... | | | | | | |
| | **code_filters** | | | | | | u( 1 ) |
| | if ( code_filters) { | | | | | | |
| | for (m=0;m<MODE_NUM;m++) { | | | | | | |
| | | **code_filte**r_**flag[m]** | | | | | u( 1 ) |
| | | if (code filter flag[m]==1) | | | | | |
| | | | for (pos=0; pos<POS_NUM[m];pos++) { | | | | |
| | | | | **code_pos_flag[m][pos]** | | | u( 1 ) |
| | | | | if (code_filter_flag[m][pos]) { | | | |
| | | | | | for (coeff_n=0; coeff_n<COEFF_NUM[m][pos];coeff n++) | | |
| | | | | | **coeff_N_bit_fi×ed_value[m][pos][coeff_n]** | | u(N) |
| | | | | | } | | |
| | | | | | } | | |
| | | | | } | | | |
| | | | } | | | | |
| | | | ... | | | | |
| } | | | | | | | |

As other implementations of the second embodiment, the prediction filters' information is encoded/decoded with an interval of the video/image contents with any specific length.

Furthermore, the second embodiment adopts various encoding techniques for prediction filters' information to reduce the transmission cost. The following gives 5 implementations to illuminate the encoding techniques of prediction filters' information.

### Implementation of encoding prediction filters' information 2.1:

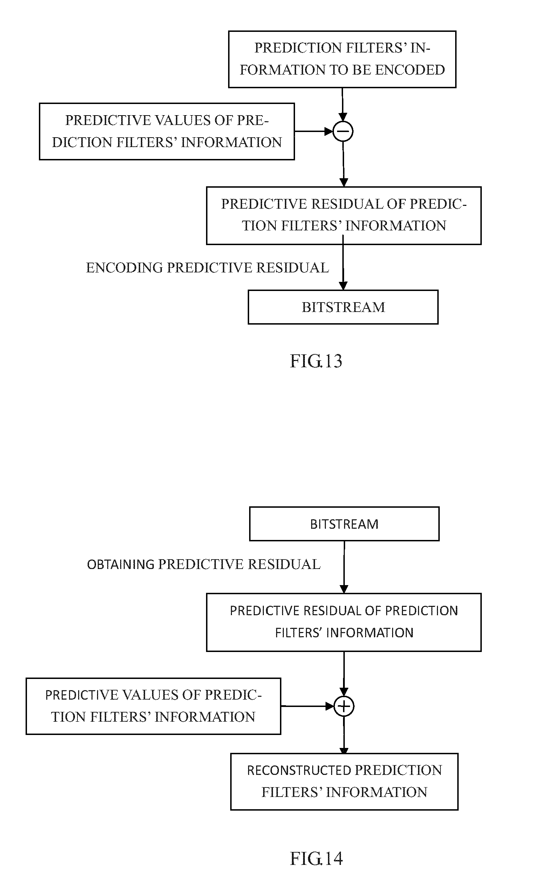

Implementation of encoding prediction filters' information 2.1 adopts prediction technique, as shown in FIG.13. Firstly, generating the residual by subtracting the predictive values of prediction filters' information from the original ones. The prediction residual is coded and writen into the bitstream. Corresponding, the decoder decodes and reconstruts the filter following the procedure shown in FIG.14. Firstly,extracting the prediction residual of filter information from the bitstream.Secondly, the filter information is reconstruted by adding the predictive values to the residual values.

The electing of predictive values of filter information is very important in order to improve the coding efficiency of prediction filters' information.In the implementation of encoding prediction filters' information 2.1, the predictive values of filter information are predetermined before the process of encoding and decoding.The methods of generating predetermined predictive values of filter information include but not limited to:
1) Obtain the statistical average of each parameter comprising in prediction filters by training a group of video sequence.
2) Define the predictive values based on the properties of the corresponding spatial prediction mode. For example,the predictive value of each parameter comprising in the prediction filters corresponding to honrizontal prediction mode is defined as a parameter with the property of horizontal extrapolation.

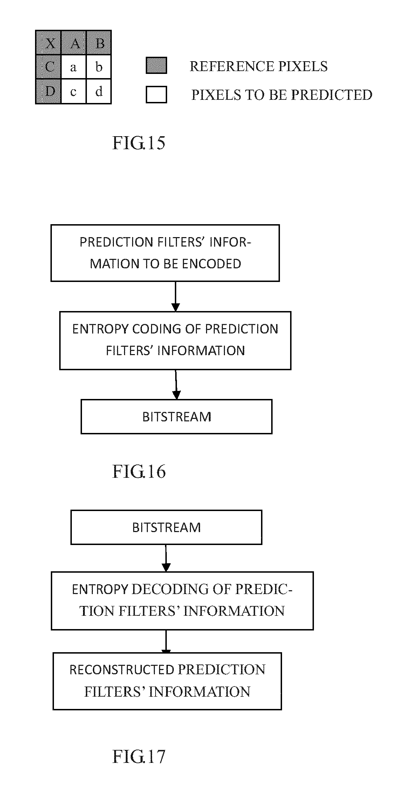

In the following example, the region to be predicted is a 2x 2 block with 5 left and upper reconstructed reference pixels, as shown in FIG.15. The linear prediction filter matrix corresponding to a specific spatial prediction mode is denoted as *W^{m}*; ${W}^{m} = \left[\begin{matrix}{\begin{matrix}w\end{matrix}}_{a , A}^{m} & {\begin{matrix}w\end{matrix}}_{a , B}^{m} & ⋯ & {\begin{matrix}w\end{matrix}}_{a , X}^{m} \\ {\begin{matrix}w\end{matrix}}_{b , A}^{m} & & & \\ ⋮ & & ⋱ & \\ {\begin{matrix}w\end{matrix}}_{d , A}^{m} & & & {\begin{matrix}w\end{matrix}}_{d , X}^{m}\end{matrix}\right]$

When the first method of generating predetermined predictive values of filter information is utilized, statistical properties are obtained after training a group of video sequence. Assume the obtained statiscal arverge of the linear prediction filter's tap coefficients(the parameter of filter information)are: ${W}_{pred}^{m} = \left[\begin{matrix}0.7 & 0.1 & 0.1 & 0.0 & 0.1 \\ 0.2 & 0.8 & 0.0 & 0.0 & 0.0 \\ 0.6 & 0.1 & 0.1 & 0.2 & 0.0 \\ 0.1 & 0.7 & 0.0 & 0.2 & 0.0\end{matrix}\right]$

The predictive values of the prediction filter corresponding to a specific prediction mode is ${W}_{pred}^{m}$ Assume when a video frame is encoded,the content adaptively calcuated prediction filter corresponding to a specific spatial prediction mode is shown as follows: ${W}_{a}^{m} = \left[\begin{matrix}0.6 & 0.0 & 0.2 & 0.0 & 0.1 \\ 0.1 & 0.9 & 0.0 & 0.0 & 0.0 \\ 0.4 & 0.2 & 0.2 & 0.2 & 0.0 \\ 0.0 & 0.8 & 0.0 & 0.2 & 0.0\end{matrix}\right]$

The prediction residual of filter information need to encoded is shown as follows: $\begin{matrix}{W}_{res}^{m} & = {W}_{a}^{m} - {W}_{pred}^{m} \\ & = \left[\begin{matrix}- 0.1 & - 0.1 & 0.1 & 0.0 & 0.0 \\ - 0.1 & 0.1 & 0.0 & 0.0 & 0.0 \\ - 0.2 & 0.1 & 0.1 & 0.0 & 0.0 \\ - 0.1 & 0.1 & 0.0 & 0.0 & 0.0\end{matrix}\right]\end{matrix}$

Finally,the prediction residual of filter information is encoded and written into the bitstream.

When the second method of generating the predictive values of filter information is utilized,the predictive values are determined according to the properties of the corresponding spatial prediction mode. Assume the corresponding spatial prediction mode is the horizontal mode,the predictive value of each parameter comprising in the prediction filter is defined as a parameter with the property of horizontal extrapolation shown as follows: ${W}_{pred}^{Hor} = \left[\begin{matrix}0.0 & 0.0 & 1.0 & 0.0 & 0.0 \\ 0.0 & 0.0 & 1.0 & 0.0 & 0.0 \\ 0.0 & 0.0 & 0.0 & 1.0 & 0.0 \\ 0.0 & 0.0 & 0.0 & 1.0 & 0.0\end{matrix}\right]$

The predictive values of target pixels a and b copy the reference pixel C along the horizontal direction and the predictive values of target pixels c and d copy the reference pixel D along the horizontal direction.

Then, the residual values are generated by subtracting the parameter predictive values from the orignal parameter values comprising in a coded prediction filter are coded and written into the bitstream.

Corresponding, the decoder firstly obtains the predictive residual values of filter information ${w}_{res}^{m}$ from the bitstream. Then,the prediction filter ${w}_{a}^{m}$ of a specific spatial prediction mode in a certain video frame is reconstruted by adding the corresponding predictive values of filter information ${w}_{pred}^{m}$ to the residual values of filter information ${w}_{res}^{m}$

Note that the region size and shape to be predicted,the parameters comprising in a prediction filter, the statistical parameter predictive values of a specific spatial prediction mode in the implementation of encoding prediction filters' information 2.1 can vary according to the application requirements, not limiting to the above special case.

From the above observation, the dynamic range of predictive residual is siginaficantly minimized by applying accuracy predictive values of filter information, Thus the coding efficiency is improved by utiliszing less bits to encode filter information.

### Implementation of encoding prediction filters' information 2.2:

The overall procedure of implementation 2.2 can refer to the above implementation 2.1. The difference between the two implementations is the different methods of generating predictive values of filter information. In the implenmentation 2.2, the predictive values of filter information are generated according to the location relationship between the reference pixel and the current coding pixel.

Take the spatial prediction mode in FIG.15 as an example.After the filter's tap coefficients ${w}_{a , A}^{m} ∼ {w}_{a , X}^{m}$ acting on the current coding pixel a are coded,they can be utilized as the predictive values of filter's tap coefficients acting on the current coding pixel b. According to the location relationship between pixel a and b, the relationship between reference pixel X and the current coding pixel a is regarded equal to the relationship between reference pixel A and the current coding pixel b. Similarly,the relationship between reference pixel A and the current coding pixel a is regard equal to the relationship between refernce pixel B and the current coding pixel b. Thus ${w}_{a , X}^{m}$ is utilized as the predictive value of ${w}_{b , A}^{m}$ and ${w}_{a , A}^{m}$ is utilized as the predictive value of ${w}_{b , B}^{m}$

Filter's tap coefficients ${w}_{a , A}^{m} ∼ {w}_{a , X}^{m}$ can also be utilized as the predictive values of filter's tap coefficients acting on the current coding pixel c.Based on the spatial location relationship between pixel c and pixel a, the relationship between reference pixel X and the current coding pixel a is regarded equal to the relationship between reference pixel C and the current coding pixel c. Similarly,the relationship between reference pixel C and the current coding pixel a is regarded equal to the relationship between refemce pixel D and the current coding pixel c. Thus ${w}_{a , X}^{m}$ is utilized as the predictive value of ${w}_{c , C}^{m}$ and ${w}_{a , C}^{m}$ is utilized as the predictive value of ${w}_{c , D}^{m}$

There are other various implementations of generationg predive values of filter information based on the spatial location relationship between the reference pixel and the current coding pixel. As another implmentation,the spatial location relationship between reference pixel and current coding pixel is utilized combining the texture direction of spatial prediction mode. Take the spatial prediction mode of diagonal right down as an example, after the filter's tap coefficients ${w}_{a , A}^{m} ∼ {w}_{a , X}^{m}$ actting on the current coding pixel a are coded,they can be utilized to generate the predictive values of the filter's tap coefficients acting on the current coding pixel d.Since the reference pixel x,the current coded pixel a and the current coded pixel d is in the same line of the texture direction diaginal right down, the three pixels are considered to have close pixel values, thus ${w}_{a , X}^{m}$ is utilized as the predictive value of ${w}_{d , X}^{m}$

Note that the method in implementation 2.2 of generating predictive values of filter information based on the spatial location relationship between reference pixels and current coding pixels can vary according to the application requirements,not limiting to the above special case.

### Implementation of encoding prediction filters' information 2.3:

The coding of predictive filter information in implementation 2.3 adopts the entropy encoding to predict filter information in the encoding system and entropy decoding decoding in the decoding system,as shown in FIG.16 and FIG.17. The encoder applies entropy encoding based on the property distribution of filter information and the results of entropy coding are writen into the bit stream as shown in FIG.16;correspondingly, the decoder applies entropy decoding to the filter information obtained from the bitstream and reconstructs the prediction filter, as shown in FIG.17.

The method of entropy coding in implementation 2.3 can be one of exponentialgolomb coding, huffman Coding, arithmetic coding based on the property distribution of filter information and application requirements.

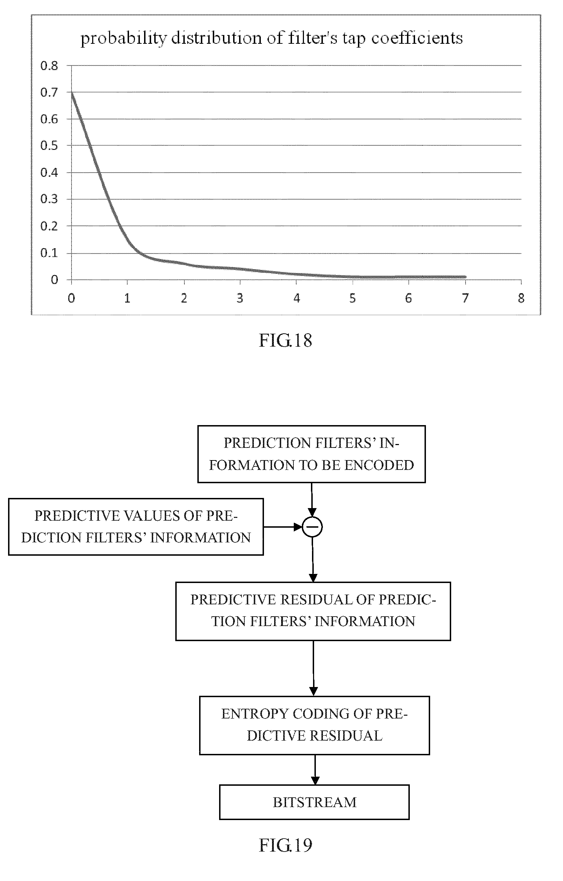

For example,all filter coefficients of prediction filters corresponding to a specific spatial prediction mode are within the range0-7,the property distribution is shown in the Table 3 and FIG.18.

**Table 3 the probablity distribution of prediction filter coefficients' values**

| values | 0 | 1 | 2 3 | 4 | 5 | 6 | 7 |
|---|---|---|---|---|---|---|---|
| probablity | 0.7 | 0.15 | 0.06 0.04 | 0.02 | 0.01 | 0.01 | 0.01 |

Thus,a coding table is applied based on the property distrubtion. The coding table can be selected among huffman coding in Table 4,zero-order exponentialgolomb coding in Table 5 , the arithmetic coding based on the property distrubtion,entropy coding to the prediction filter coefficients of a specific spatial prediction mode.

**Table 4 Huffman Coding Table**

| coefficient values | code length | code words |
|---|---|---|
| 0 | 1 | 0 |
| 1 | 2 | 10 |
| 2 | 3 | 110 |
| 3 | 4 | 1110 |
| 4 | 6 | 111101 |
| 5 | 6 | 111100 |
| 6 | 6 | 111111 |
| 7 | 6 | 111110 |

**Table 5 Zero-order exponentialgolomb Coding Table**

| coefficient values | code length | code words |
|---|---|---|
| 0 | 1 | 0 |
| 1 | 3 | 010 |
| 2 | 3 | 011 |
| 3 | 5 | 00100 |
| 4 | 5 | 00101 |
| 5 | 5 | 00110 |
| 6 | 5 | 00111 |
| 7 | 7 | 0001000 |

When the prediction filter coefficients to be coded are {0,1,0,0,3},the coding result of applying Huffman coding and zero-order exponentialgolomb coding respectively are as following:
Huffman coding bits: 010001110
Zero-order exponentialgolomb coding bits: 00100000100

Note that the property distrubition of prediction filters' information varies, the specific entropy coding adopted can vary according to the application requirements, not limiting to the above special case in implementation 2.3.

### Implementation of encoding prediction filters' information 2.4:

The overall procedure of implementation 2.4 of coding prediction filter information can refer to the above implementation 2.3.The difference between the two implementations is the different entropy coding methods are adopted for different parameters comprising in the coded prediction filter information.

To be specific, take the spatial prediction mode in FIG.15 as an example, the prediction filter information comprising 20 filter coefficients and different entropy coding methods are adopted for different filter coefficients based on their different property distribution. For example, exponentialgolomb coding of different order or huffman coding of different coding tables is applied to different filter coefficients.

The implementation achieves better coding performance in the case the property distribution of parameters comprising in the prediction filter information are different from each other.

### Implementation of encoding prediction filters' information 2.5:

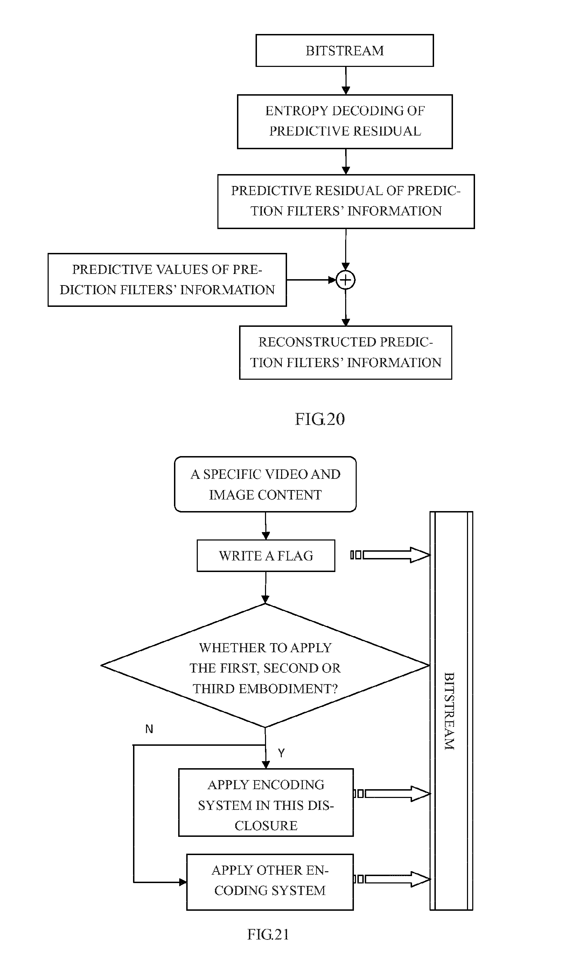

The implementation in 2.5 combines the techniques of predictive coding of filter coefficients in implementation in 2.1 and 2.2 and entropy coding of filter coefficients in implementation in 2.3 and 2.4, as shown in FIG.19 and FIG.20. In the encoding system, the predictive residue of filter information is generated by applying predictive coding method to the coded filter information. Then entropy coding is applied to the predictive residue and the coding results are written into the bitstream. Correspondingly, the decoder obtains the entropy coding results of the coded predictive residue of filter information.The predictive residue is generated by applying entropy decoding. And finally, the decoder reconstruts the filter information by adding the predictive information to the residual information.

The predictive method and entropy coding method involved in the implementations from 2.1 to 2.4 can be applied to the implementation 2.5.

### Exemplary Embodiment 3:

The following is a description of the embodiment 3. The embodiment relates to a video/image encoding system based on spatial prediction method and a video/image decoding system based on spatial prediction method.

The embodiment 3 is an integrated application of the embodiment1 and embodiment 2 in this disclosure.

As an implementation of the embodiment 3, the overall procedure of encoding and decoding system can refer to the second embodiment(refer to FIG.11,FIG.12 and their illuminiations), the prediction filter whose filter information is coded and writen into the bitstream(or obtained from the bit stream in the decoding system) is adaptively generated by adopting the method described in the first embodiment(refer to FIG.5 and its illumination)

As another implementation of embodiment 3, a part of spatial prediction modes in the encoding and decoding system adopt the method described in the first embodiment to adaptively generate the prediction filter. The generated filter information is coded and writen into the bitstream by adopting the method as described in the second embodiment(or obtained from the bitstream in the decoding system); meanwhile, the encoder and decoder adaptively generate the rest part of spatial prediction modes by adopting the method as described in the first embodiment based on the reconstruct image. The rest part of spatial prediction modes are generated in the same method in both encoding and decoding system, so the filter information of these spatial prediction modes is not encoded and writen into the bitstream(or obtained form the bitstream in the decoding system).

### Exemplary Embodiment 4:

The following is a description of the embodiment 4. The embodiment relates to a video/image coding system based on spatial prediction method and a video/image decoding system based on spatial prediction method.

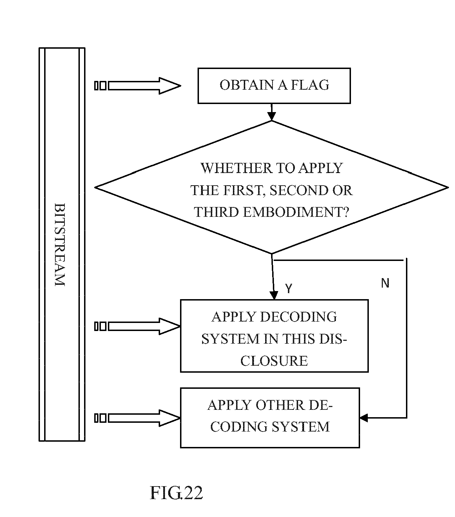

The encoding system of the embodimen writes a flag into the bitstream to indicate whether a specific video and image content applies the encoding method of the first embodiment or the second embodiment or the third embodiment or not,as shown in FIG.21. Correspondingly, the decoder obtains the flag from the bitstream. The flag is used to indicate whether a specific video and image content applies the decoding method of the first embodiment or the second embodiment or the third embodiment or not,as shown in FIG.22. The specific embodiment of encoding system and decoding system can refer to the illumination of the first, the second or the third embodiment.

Table 6 shows an example of this embodiment represented by syntax. use_adaptive_rediction_filter in Table 6 is a flag metioned above in this embodiment. When use_adaptive_rediction_filter equals 1, the encoding system of the first or the second or the third embodiment is applied. When use_adaptive_rediction_flag equals 0, other encoding system is applied.

In pratical application, a set of simple, predetermined spatial prediction modes(such as the spatial prediction modes defined in H.264/AVC) achieve good coding preformance. There is no need to apply the adaptive spatial prediction modes mentioned in this disclosure.The embodiment 4 is proposed to adapt to the relatively flat image regions with simple texture.

**Table 6:**

| frame_header( ) | | | C | Descriptor |
|---|---|---|---|---|
| { | | | | |
| | ... | | | |
| | **use_adaptive_prediction_filter** | | | u( 1 ) |
| | if (use adaptive prediction filter) { | | | |
| | | ...// refer synax content to the requirement of the first, the seconde and third embodiment | | |
| | } | | | |
| | ... | | | |
| } | | | | |

Note that Table 6, as an implementation of embodiment, shows a method of writing and obtaining a flag for a video frame and image content. A specific length of video content in this disclosure is not limited to a video frame and image content. It can be a video sequence, a group of pictures, a slice, one or several macro-blocks.

## Claims

1. A video/image encoding system based on spatial prediction, the system employing at least one spatial prediction mode to predict and encode, where at least one spatial prediction mode acts on at least one pixel in the image region to be encoded to generate the predictive values, using a prediction filter based on one or more reference pixels, at least one spatial prediction mode of the system having one or a combination of the following characteristics:
generating the predictive values by the prediction filters which are content-based adaptively calculated through maximizing or minimizing the optimization objective in a specific image region;
coding and writing the information of at least one prediction filter used by the spatial prediction mode (modes) to the bitstream.

2. The system of claim 1, adaptively calculating the spatial prediction filters further specifying adaptively calculating the tap coefficients of the prediction filters.

3. The system of claim 1, the optimization objective further being one of the followings:
rate-distortion cost,
the sum of residual energy,
the weighted sum squares of predictive residual in the spatial domain,
the weighted sum squares of predictive residual in the frequency domain.

4. The system of claim 3, when the optimization objective is the sum of residual energy or the weighted sum squares of predictive residual in the spatial or the weighted sum squares of predictive residual in the frequency domain, the optimization objective further being maximized or minimized by the differential on the optimization objective.

5. The system of claim 1, content-based adaptively calculating the spatial prediction filters further comprising the following procedures:
separating the image to be encoded into at least one image sub-region, according to one classification criteria, and setting the image sub-region for each spatial prediction mode of adaptively calculated spatial prediction filter;
calculating the prediction filters adaptively through maximizing or minimizing the optimization objective in a specific image region.

6. The system of claim 5, the classification criteria further specifying the criteria based on the texture direction of the image.

7. The system of claim 1, the specific image region further specifying the region corresponding to the encoded image on the original or reconstructed image.

8. The system of claim 1, coding and writing the information to the bitstream further having at least one of the following characterizes:
the shape of the prediction filter corresponding region to be predicted being but not limited to the NxM rectangular, where N and M is any positive integer;
the reference pixels acted on by the prediction filter being the reconstructed pixels at any positions in the current video/image;
the prediction filter being linear filter or non-liner filter.

9. The system of claim 1, the prediction filters' information to be coded and to be written to the bitstream further having at least one of the following characterizes:
the prediction filters' information being the tap coefficients of the filter, or the matrix corresponding to the tap coefficients or the combination of the tap coefficients and the matrix corresponding to the tap coefficients;
the interval of writing the information being the video/image contents with any specific length.

10. The system of claim 1, the method of coding and writing the information of at least one prediction filter used by the spatial prediction mode (modes) to the bitstream further being one of the followings:
predicting the prediction filters' information, coding and writing the predictive errors of the information to the bitstream;
entropy coding the prediction filters' information and writing the entropy coded prediction filters' information to the bitstream.

11. The system of claim 10, the predictive values of the prediction filters' information further having at least one of the following characterizes:
the predictive values being pre-defined;
the predictive values being generated according to the reference pixels and the relationship of the positions of the pixels to predicted.

12. The system of claim 10, the entropy coding following the prediction to the prediction filters' information, the predictive errors being entropy coded and written to the bitstream.

13. A video/image encoding system, the system writing a flag to the bitstream, the flag indicating whether or not to encode a specific video/image sequence by the system descripted as claim 1-12.

14. A video/image decoding system based on spatial prediction, the system employing at least one spatial prediction mode to decode, where at least one spatial prediction mode acts on at least one pixel in the image region to be decoded to generate the predictive values, using a prediction filter based on one or more reference pixels, at least one spatial prediction mode of the system having one or a combination of the following characteristics:
generating the predictive values by the prediction filters which are content-based adaptively calculated through maximizing or minimizing the optimization objective in a specific reconstructed image region;
obtaining the information of at least one prediction filter used by the spatial prediction modes from the bitstream, reconstructing the prediction filters by the information, decoding the region to be decoded using the reconstructed prediction filters.

15. The system of claim 14, adaptively calculating the spatial prediction filters further specifying adaptively calculating the tap coefficients of the prediction filters.

16. The system of claim 14, the optimization objective further being one of the followings:
rate-distortion cost,
the sum of residual energy,
the weighted sum squares of predictive residual in the spatial domain,
the weighted sum squares of predictive residual in the frequency domain.

17. The system of claim 16, when the optimization objective is the sum of residual energy or the weighted sum squares of predictive residual in the spatial domain or the weighted sum squares of predictive residual in the frequency domain, the optimization objective further being maximized or minimized by the differential on the optimization objective.

18. The system of claim 14, content-based adaptively calculating the spatial prediction filters further comprising the following procedures:
separating the image to be decoded into at least one image sub-region, according to one classification criteria, and setting the image sub-region for each spatial prediction mode of adaptively calculated spatial prediction filter;
calculating the prediction filters adaptively through maximizing or minimizing the optimization objective in a specific image region.

19. The system of claim 18, the classification criteria further specifying the criteria based on the texture direction of the image.

20. The system of claim 14, the prediction filters with the information obtained from thhe bitstream further having at least one of the following characterizes:
the shape of the prediction filter corresponding region to be predicted being but not limited to the NxM rectangular, where N and M is any positive integer;
the reference pixels acted on by the prediction filter being the reconstructed pixels at any positions in the current video/image;
the prediction filter being linear filter or non-liner filter.

21. The system of claim 14, the prediction filters' information obtained from the bitstream further being the tap coefficients of the filter, or the matrix corresponding to the tap coefficients or the combination of the tap coefficients and the matrix corresponding to the tap coefficients

22. The system of claim 14, the method of obtaining the information of at least one prediction filter used by the spatial prediction mode (modes) from the bitstream further being one of the followings:
obtaining the predictive errors of the prediction filters' information from the bitstream, reconstructing the prediction filters according to the predictive errors and the prediction values of the predication filters' information, decoding the region to be decoded using the reconstructed prediction filters;
obtaining the entropy coding results of the prediction filters' information, reconstructing the prediction filters through entropy coding, decoding the region to be decoded using the reconstructed prediction filters.

23. The system of claim 22, the predictive values of the prediction filters' information further having at least one of the following characterizes:
the predictive values being pre-defined;
the predictive values being generated according to the reference pixels and the relationship of the positions of the pixels to predicted.

24. The system of claim 22, the entropy coding results further specifying the predictive errors of the prediction filters' information, the predictive errors being added to the predictive values of the prediction filters' information to reconstruct the prediction filters, decoding the region to be decoded using the reconstructed prediction filters.

25. A video/image decoding system, the system obtaining a flag from the bitstream, the flag indicating whether or not to decode a specific video/image sequence by the system descripted as claim 14-24.
